# EUROPÄISCHE PATENTSCHRIFT

(11) **EP 2 585 770 B1**
(45) Veröffentlichungstag und Bekanntmachung des Hinweises auf die Patenterteilung: **12.08.2015**
(21) Anmeldenummer: 11725056.3
(22) Anmeldetag: 08.06.2011
(51) Int. Cl.: F24J 2/04, F24J 2/26, F24J 2/48

(54) **SOLARABSORBER, SOLARABSORBERVORRICHTUNG UND SOLARKOLLEKTOR**
SOLAR ABSORBER, SOLAR ABSORBER DEVICE AND SOLAR COLLECTOR
ABSORBEUR SOLAIRE, DISPOSITIF ABSORBEUR SOLAIRE ET COLLECTEUR SOLAIRE

(30) Priorität: 23.06.2010 DE 102010024740
(43) Veröffentlichungstag der Anmeldung: 01.05.2013
(73) Patentinhaber: Robert Bosch GmbH, 70442 Stuttgart (DE)
(72) Erfinder: WEIL, Thomas, 71665 Vaihingen (DE); BOEDEKER, Hendrik, 99084 Erfurt (DE); CLEMENT, Uwe, 73114 Schlat (DE)
(86) Internationale Anmeldenummer: PCT/EP2011/059434
(87) Internationale Veröffentlichungsnummer: WO 2011/160948

(56) Entgegenhaltungen:
- EP-A1- 1 688 684
- DE-A1-102006 043 796
- DE-U1- 8 911 484
- DE-U1-202009 011 991
- US-A- 5 167 218
- US-A1- 2006 042 625

## Beschreibung

Die Erfindung betrifft einen Solarabsorber, insbesondere einen Solarabsorber für eine Solarabsorbervorrichtung und/oder einen Solarkollektor, zum Absorbieren einer Solarstrahlung nach dem Oberbegriff des Anspruchs 1. Zudem betrifft die Erfindung eine Solarabsorbervorrichtung nach dem Oberbegriff des Anspruchs 13. Weiterhin betrifft die Erfindung einen Solarkollektor nach dem Oberbegriff des Anspruchs 15.

Solarkollektoren und die Energiegewinnung hieraus sind bekannt. In den letzten Jahren hat die Gewinnung von Nutzenergie aus regenerativen Quellen, wie der Sonne, zunehmende Bedeutung erlangt. Für die direkte Nutzung von Sonnenenergie ist neben der photovoltaischen Erzeugung von Strom die solarthermische Energiegewinnung aus der Solarstrahlung von wesentlicher Bedeutung. Im solarthermischen System wird die Energie der Solarstrahlung zunächst in Wärmeenergie umgewandelt. Dazu wird sie mittels eines Solarkollektors auf dem Dach absorbiert und auf ein geeignetes Solarfluid weitergeleitet, das für den Transport der gewonnenen Wärme in ein größeres Reservoir, beispielsweise in einem Keller eines Hauses, dient. Ein wesentliches Element des Solarkollektors ist dabei ein Solarabsorber, der für die Aufnahme der solaren Strahlungsenergie und deren Umwandlung in Wärmeenergie vorgesehen ist. Üblicherweise wird der Solarabsorber als dünne Kupfer- oder Aluminiumfolie realisiert, der zur Verbesserung seiner optischen Eigenschaften, also hohe Absorption im sichtbaren Solarbereich, niedrige Emission im infraroten Solarbereich, mit einer extrem dünnen selektiven Zusatzschicht versehen werden kann. Unterhalb der Metallfolie befindet sich üblicherweise ein System aus Rohrleitungen, durch welches ein Solarfluid strömt, das in thermischen Kontakt mit dem Absorber steht. Es dient dazu, im Solarabsorber die entstehende Wärme auf das Solarfluid weiterzuleiten. Das Solarfluid transportiert die Wärme dann weiter, typischerweise in einen Vorratstank auf dem Dach oder in einem Keller eines Gebäudes. Für die Topologie des Rohrsystems sind verschiedene Varianten vorgesehen. Dabei beeinflusst die Anordnung der Rohre den Wärmefluss zwischen Solarabsorber und Solarfluid.

Generelles Ziel eines Solarkollektors ist es, einen möglichst hohen Wirkungsgrad über den im Solarabsorber auftretenden Temperaturbereich zu realisieren. Nach anfänglichen Strahlungsverlusten durch Reflexion und Absorption an einer den Solarkollektor vor Umwelteinflüssen schützenden Glasscheibe und Reflexionsverlusten am Solarabsorber wird der Wirkungsgrad auch durch Wärmeverluste mitbestimmt.

Typischerweise bedeuten Maßnahmen, die die Wärmeableitung verbessern, also beispielsweise die Verwendung von besser wärmeleitenden Materialien oder einer dickeren Absorberfolie, gleichzeitig jedoch eine Erhöhung der Herstellungskosten des Solarkollektors.

Aus der Gebrauchsmusterschrift DE 20 2009 011 991 U1 ist ein solarthermischer Absorber bekannt, bei dem ein Metallschaum mindestens ein die Wärme aufnehmendes Medium führendes Rohr ganz oder teilweise umschließt und mit diesem thermisch leitend, insbesondere stoffschlüssig, verbunden ist, wobei der Metallschaum auf der nach Einbau dem einfallenden Sonnenlicht zugewandten Seite offenporig ist oder eine geschlossene Haut aufweist. Um eine möglichst hohe Absorption bei möglichst niedrigen Wärmeabstrahlverlusten zu erreichen, kann der Absorber auf besagter Seite beschichtet oder eingefärbt sein, insbesondere mit schwarzer Farbe.

US 5,167,218 A zeigt einen Solarabsorber zum Absorbieren von Solarstrahlung, der einen wärmeleitenden Grundkörper aufweist und mit mindestens einem Rohr zur Führung eines Wärme aufnehmenden Mediums versehen ist. Der Grundkörper weist als Wärmeleitmittel eine metallische Beschichtung in Form einer Absorberplatte auf, die mit abnehmenden Abstand zum Rohr eine zunehmende Dicke hat, um einen Wärmefluss zum Rohr zu verbessern.

Aus DE 89 11 484 U1 ist ein Solarabsorber mit einem Grundkörper bekannt, der Rippen aufweist, die parallel zu einem Rohr für das die Wärme aufnehmende Medium verlaufen.

EP 1 688 684 A1 offenbart einen Solarabsorber, wobei Rohre, die zur Führung von Wärme aufnehmenden Medien dienen, in einer Kollektorwanne aus expandierten Graphit aufgenommen werden, wobei das expandierte Graphit wärmeleitfähig ist. Zur Verbesserung einer lateralen Wärmeverteilung wird in einer bevorzugten Ausgestaltung auf einer der Sonneneinstrahlung zugewandten Oberfläche des expandierten Graphits eine weitere wärmeleitfähige Schicht angeordnet.

In DE 10 2006 043 796 A1 ist ein Solarabsorber beschrieben, bei dem fluidführende Rohre in einem Phasenumwandlungswärme speichernden Medium geführt werden. Dabei wird zur Verringerung von Reflexionsverlusten vorgeschlagen, eine der Sonneneinstrahlung zugewandte Oberfläche dieses Mediums beispielsweise kegel- oder wellenförmig zu gestalten.

US 2006/042625 A1 offenbart einen Solarabsorber mit mehreren Rohren zur Führung von Wärme aufnehmenden Fluid, die in einem wärmeleitfähigen Füllmaterial eingebettet sind. Dabei weist der Solarabsorber eine Beschichtung zur Verbesserung von Absorptionseigenschaften auf.

Der Erfindung liegt die Aufgabe zugrunde, einen Solarabsorber, eine Solarabsorbervorrichtung und einen Solarkollektor zu schaffen, welche eine verbesserte Wärmeableitung und somit einen erhöhten Wirkungsgrad aufweisen, insbesondere ohne die Produktionskosten und die Komplexität des Fertigungsprozesses zu erhöhen.

Erfindungsgemäß wird dies durch die Gegenstände mit den Merkmalen des Patentanspruches 1, des Patentanspruches 13 und des Patentanspruchs 15 gelöst. Vorteilhafte Weiterbildungen sind den Unteransprüchen zu entnehmen.

Bei einem erfindungsgemäßen Solarabsorber ist vorgesehen, dass die Wärmeleitmittel des Grundkörpers sich in mindestens zwei unterschiedlich ausgebildete Bereiche aus unterschiedlichen Materialien gliedern und so eine Anpassung einer Solarabsorbertemperatur über die Flächenerstreckung des Grundkörpers des Solarabsorbers realisieren. Vorteilhafterweise ist das Material des Grundkörpers des Solarabsorbers wählbar und somit in der Gestaltung an die thermischen Wärmeleitungseigenschaften des jeweiligen Materials anpassbar. Als Materialien für den Grundkörper des Solarabsorbers inklusive der Wärmeleitmittel eignen sich zum Beispiel Kupfer, Kupferlegierungen, Aluminium, Aluminiumlegierungen und Kunststoffe. Besser wärmeleitende Materialien, wie zum Beispiel Kupfer, eignen sich besonders gut zur Ausbildung der Wärmeleitmittel.

In einer vorteilhaften Ausführungsform des Solarabsorbers ist vorgesehen, dass die Bereiche der Wärmeleitmittel in Form abwechselnd nebeneinander liegender Streifen ausgebildet sind. So können beispielsweise Streifen mit hoher Wärmeleitfähigkeit und Streifen mit geringer Wärmeleitfähigkeit sich abwechseln. Diese Streifen sind vorteilhafterweise in Richtung des fluidführenden Rohrleitungssystems ausgerichtet. Die Solarenergie, die auf die Bereiche mit geringer Wärmeleitfähigkeit auftrifft, kann direkt an das Rohrleitungssystem und/oder an die Bereiche mit hoher Wärmeleitfähigkeit weitergeleitet werden.

In einer weiteren vorteilhaften Ausführungsform des Solarabsorbers ist vorgesehen, dass die Bereiche der Wärmeleitmittel in Form abwechselnd nebeneinander liegender Dreiecke ausgebildet sind. Die Dreiecke sind zueinander versetzt angeordnet, sodass sie sich zu rechteckigen Flächen ergänzen.

Eine weitere vorteilhafte Ausführungsform des Solarabsorbers ist dadurch gekennzeichnet, dass die Bereiche der Wärmeleitmittel in Form eines Netzes ausgebildet sind. Ein Bereich, beispielsweise der mit höherer Wärmeleitfähigkeit, ist dabei von durchgehenden, zusammenhängenden Netzstegen gebildet, der andere Bereich, beispielsweise der mit niedrigerer Wärmeleitfähigkeit, ist von den Zwischenflächen gebildet, die von den Netzstegen umschlossen sind.

Vorzugsweise ist bei einem erfindungsgemäßen Solarabsorber, insbesondere einem Solarabsorber für eine Solarabsorbervorrichtung und/oder einen Solarkollektor, zum Absorbieren einer Solarstrahlung und Weiterleitung einer Wärme an ein Rohrleitungssystem, wobei der Solarabsorber einen wärmeleitenden Grundkörper mit einer Dicke aufweist, vorgesehen, dass der wärmeleitende Grundkörper Wärmeleitmittel mit variablem Dickenverlauf zur gerichteten Wärmeleitung aufweist.

Erfindungsgemäß bedeutet die Anpassung der Solarabsorbertemperatur ein Ausgleichen, Vereinheitlichen bzw. Vergleichmäßigen der Solarabsorbertemperatur bzw. der Wärmestromdichte (Wärmeflussdichte), sodass es über die Flächenerstreckung des Materials des Solarabsorbers keine oder nur sehr geringe lokale Temperaturüberhöhungen ("hot spots") bzw. Temperaturunterkühlungen ("cold spots") gibt und die Wärmestromdichte möglichst konstant ist. Diese Anpassung ist vorteilhafterweise über die gesamte Flächenerstreckung oder nur in Teilbereichen vorgesehen.

Vorteilhafterweise ist somit eine verbesserte Ableitung der entstehenden Wärme auf das Solarfluid möglich, da die Wärmeverluste reduziert werden. Dies bedeutet wiederum ein günstigeres Verhältnis von abgeführter Nutzenergie und Verlustenergie, das heißt einen gesteigerten Wirkungsgrad.

Erfindungsgemäß sind die Wärmeleitmittel in den Grundkörper des Solarabsorbers integriert und beispielsweise einteilig oder mehrteilig ausführbar.

In einer vorteilhaften Ausführungsform des Solarabsorbers ist vorgesehen, dass die Wärmeleitmittel einen variablen Dickenverlauf mit mindestens zwei unterschiedlichen Dicken umfassen. Erfindungsgemäß entspricht die Dicke des Solarabsorbergrundkörpers einer Schichtdicke senkrecht gemessen zur Absorptionsfläche des Solarabsorbers. Je größer die Dicke ist, umso weniger behindert und dadurch größer ist der Wärmestrom (Wärmefluss). Mit zunehmendem Wärmefluss und zunehmender Temperatur steigen bei herkömmlicher Bauart und gleichbleibender Wärmeleitfähigkeit des Solarabsorbers jedoch auch die Wärmeverluste. Erhöht man die Wärmeleitfähigkeit, beispielsweise durch eine Verstärkung der Dicke, ist es möglich, die thermischen Verluste auszugleichen und den Wirkungsgrad des Solarabsorbers zu verbessern.

In einer vorteilhaften Ausführungsform des Solarabsorbers ist vorgesehen, dass der Dickenverlauf kontinuierlich verlaufend ausgebildet ist. Ein gleichmäßiger, kontinuierlich zunehmender Dickenverlauf bedeutet eine kontinuierliche Erhöhung der Wärmeleitfähigkeit.

In einer anderen vorteilhaften Ausführungsform des Solarabsorbers ist vorgesehen, dass der Dickenverlauf diskret verlaufend ausgebildet ist. Beispielsweise kann der Dickenverlauf stufenförmig ausgebildet sein.

In einer weiteren Ausführungsform des Solarabsorbers ist vorgesehen, dass der Dickenverlauf abschnittsweise eine unterschiedliche Orientierung aufweist. Vorteilhafterweise ist die Orientierung des Dickenverlaufes über die gesamte Fläche des Solarabsorbers unterschiedlich ausführbar. Die Orientierung ist beispielsweise bereichsabhängig ausführbar. Dabei verläuft ein Dickenverlauf in eine Richtung zu einem Rohr. Ein weiterer Dickenverlauf ist quer zu der Verlaufsrichtung des ersten Dickenverlaufs ausgerichtet.

Eine weitere vorteilhafte Ausführungsform des Solarabsorbers ist dadurch gekennzeichnet, dass der wärmeleitende Grundkörper Wärmeleitmittel mit mindestens zwei hinsichtlich des Dickenverlaufs unterschiedlich ausgebildeten Bereichen umfasst. Dies kann beispielsweise ein Grundkörper einheitlicher Dicke sein, in den in regelmäßigen Abständen Bereiche mit variablem Dickenverlauf nach Art von Wärmeleitrippen eingelassen sind.

Erfindungsgemäß ist auch eine Kombination der Wärmeleitmittel möglich. In einer Ausführungsform ist deshalb vorgesehen, dass dickere Bereiche des Grundkörpers aus einem besser wärmeleitenden Material ausgebildet sind. Dadurch wird der gewünschte Effekt der gerichteten Wärmeweiterleitung weiter verstärkt.

Demzufolge ist es vorteilhaft, mehrere Materialsorten zu kombinieren, beispielsweise einen Solarabsorber mit konstanter Dicke aus einem günstigen, schlechter leitfähigen Material wie Aluminium oder Kunststoff und eine Netzstruktur aus einem teureren, aber besser leitfähigen Material wie Kupfer auszubilden. Allgemein werden die dickeren Bereiche bzw. die Bereiche mit erhöhtem Wärmefluss vorteilhafterweise in Abhängigkeit der Solarabsorbergeometrie beispielsweise linien- oder astförmig ausgestaltet. Bei einer linienförmigen Gestaltung ist eine einheitliche Ausrichtung von Vorteil. Die astförmige Gestaltung der Bereiche sieht in einer Ausführung einen Hauptast mit mehreren auf den Hauptast hin ausgerichteten verzweigten Unterästen vor. Durch die gesteigerte Wärmeleitfähigkeit der dickeren Bereiche sammeln diese effektiv die Wärmeenergie der umliegenden Solarabsorberbereiche und leiten sie weiter.

Nach einer vorteilhaften Ausführungsform des Solarabsorbers ist das solarfluidführende Rohrleitungssystem in den wärmeleitenden Grundkörper integriert ausgebildet. Das erfolgt beispielweise dadurch, dass das Rohrleitungssystem vom Grundkörper mit seinen Wärmeleitmitteln zumindest teilweise umschlossen ist. So kann die Wärme gleichmäßig verteilt auf einen größeren Rohrumfang in das Rohrleitungssystem und in das Solarfluid einfließen und wird auf diese Weise nicht durch enge Querschnitte und lokale Temperaturüberhöhungen behindert.

In einer vorteilhaften Ausführungsform des Solarabsorbers ist vorgesehen, dass das Material mittels Walzen hergestellt ist. Beim Herstellungsprozess des Solarabsorbers ist es möglich, mittels Walzen, die die entsprechende Geometrie des gewünschten Dickenverlaufes aufweisen, also beispielsweise stufenförmig oder kontinuierlich, den Grundkörper des Solarabsorbers in Form zu pressen bzw. walzen. Ergänzend ist es in einer Ausführungsform vorgesehen, durch Walzen verschiedene Materialbereiche des Grundkörpers miteinander zu verbinden, das heißt, aneinander zu pressen bzw. zu walzen. Vorteilhafterweise ist der Grundkörper des Solarabsorbers aus einer Folie oder einem Blech ausgeführt. Diese Materialien sind durch Walzen besonders einfach formbar.

In einer anderen vorteilhaften Ausführungsform des Solarabsorbers ist eine auf dem Solarabsorber ausgebildete Beschichtung zur Verbesserung der Absorptionseigenschaften des Solarabsorbers vorgesehen. Vorteilhafterweise ist es möglich, durch eine geeignete Zusatzschicht auf der Oberfläche des Solarabsorbers die thermischen Eigenschaften wie Absorptionsvermögen des Solarabsorbers, über seine gesamte Fläche oder Teilbereiche zu verbessern. Als Material für die Beschichtung eignet sich beispielsweise Schwarzchrom.

In Kombination mit den erfindungsgemäßen Wärmeleitmitteln, also variierende Dicke und/oder variierendes Material de Grundkörpers, welche lokale Bereiche verbesserten Wärmeflusses ergeben, ist der integrale Wärmefluss über die gesamte Solarabsorberfläche auf diese Weise weiter steigerbar.

Die Erfindung schließt weiter die technische Lehre ein, dass eine Solarabsorbervorrichtung, umfassend mindestens einen Solarabsorber zum Absorbieren einer Solarstrahlung, und mindestens ein von einem Solarfluid durchströmbares Rohrleitungssystem, welches in wärmeleitender Wirkverbindung mit dem mindestens einen Solarabsorber steht, vorgesehen ist, wobei der Solarabsorber als erfindungsgemäßer Solarabsorber ausgebildet ist. Das Rohrleitungssystem wird erfindungsgemäß aus mehreren fluidisch miteinander verbundenen Rohren gebildet. Vorteilhafte Anordnungsformen sind zum Beispiel die Harfenform, die Mäanderform oder die Doppelmäander-Form. Sie unterscheiden sich unter anderem in Parametern wie Rohrlänge, Strömungshomogenität und Druckverlust und beeinflussen den Wärmefluss zwischen Solarabsorber und Solarfluid. Das Solarfluid strömt hierbei durch die Rohre des Rohrleitungssystems.

In einer vorteilhaften Ausführungsform der Solarabsorbervorrichtung ist vorgesehen, dass die Wärmeleitmittel des Solarabsorbers korrespondierend zu dem Rohrleitungssystem ausgebildet sind, sodass eine einheitliche volumetrische Wärmeflussdichte von dem Solarabsorber zu dem durch das Rohrleitungssystem strömenden Solarfluid realisiert ist. Vorteilhafterweise ist es möglich, die Wärmeleitfähigkeit des Solarabsorbers der Wärmeenergieflussverteilung anzupassen und dadurch insgesamt eine Verringerung der thermischen Verluste zu erzielen. Dies geschieht auf einfachste Weise durch lokale Anpassung der Dicke und/oder des Materials des Solarabsorbers. In Bereichen über den Rohren ist die Absorption einer auf die Oberfläche des Solarabsorbers einfallenden Solarstrahlung am größten. Ein Rohr stellt quasi eine "Senke" dar, da von dort aus die Wärme zügig vom Solarabsorber zu dem Solarfluid in dem Rohr weggeführt wird. Die Tatsache, dass die Rohre des Rohrleitungssystems nur einen kleinen Teil der Solarabsorberunterseite bedecken, führte bisher dazu, dass die Wärmestromdichte durch die Solarabsorberfläche im Allgemeinen nicht konstant ist. Während im Stand der Technik zum Beispiel in der Mitte zwischen zwei Rohren praktisch kein Wärmefluss auftritt, steigt der Betrag des Wärmeflusses zum Rohr hin immer mehr an. Bei konstanter lokaler Wärmeleitfähigkeit eines Solarabsorbers gemäß dem Stand der Technik führte dies dazu, dass die thermischen Verluste in Bereichen größeren Wärmeflusses höher waren als in Bereichen mit fast verschwindendem Wärmefluss.

Um diesen thermischen Verlusten in den Bereichen mit erhöhtem Wärmefluss entgegenzuwirken, werden erfindungsgemäß Wärmeleitmittel eingesetzt. Die Wärmeleitmittel bestehen in einer Erhöhung der Dicke des Grundkörpers und/oder einer Variation des Materials des Grundkörpers in der Nähe einer Rohrleitung des Rohrleitungssystems. Derartige Wärmeleitmittel sind unmittelbar auf die jeweilige Rohrgeometrie, beispielsweise eine Doppelmäanderform, anpassbar. Dabei sind insbesondere Abstand, Form und Dicke der jeweiligen Bereiche mit erhöhtem Wärmefluss an die vorhandene Rohrgeometrie anpassbar. Durch die Anpassung der Wärmeleitmittel an die Rohrgeometrie ist eine weiter verbesserte einheitliche volumetrische Wärmeflussdichte von dem Solarabsorber zu dem durch das Rohrleitungssystem strömende Solarfluid realisierbar.

Zudem schließt die Erfindung die technische Lehre ein, dass ein Solarkollektor, umfassend mindestens eine Solarabsorbervorrichtung zum Umwandeln von Strahlungsenergie in Wärmeenergie, vorgesehen ist, wobei die Solarabsorbervorrichtung als erfindungsgemäße Solarabsorbervorrichtung ausgebildet ist.

Die Zeichnungen stellen verschiedene Ausführungsbeispiele dar und zeigen in den Figuren:
- Fig. 1: einen schematischen Querschnitt durch eine Solarabsorbervorrichtung nach dem Stand der Technik,
- Fig. 2: einen schematischen Querschnitt einer Ausführungsform einer nicht erfindungsgemäßen Solarabsorbervorrichtung,
- Fig. 3: einen schematischen Querschnitt einer weiteren Ausführungsform einer nicht erfindungsgemäßen Solarabsorbervorrichtung,
- Fig. 4: einen schematischen Querschnitt einer weiteren Ausführungsform einer nicht erfindungsgemäßen Solarabsorbervorrichtung,
- Fig. 5: eine schematische Ansicht von unten auf eine nicht erfindungsgemäße Solarabsorbervorrichtung gemäß der Fig. 3,
- Fig. 6: eine schematische Ansicht von unten auf eine Ausführungsform einer erfindungsgemäßen Solarabsorbervorrichtung,
- Fig. 7: eine schematische Ansicht von unten auf eine weitere Ausführungsform einer erfindungsgemäße Soarabsorbervorrichtung,
- Fig. 8: eine schematische Ansicht von unten auf eine weitere Ausführungsform einer erfindungsgemäßen Solarabsorbervorrichtung,
- Fig. 9: eine schematische Ansicht von unten auf eine weitere Ausführungsform einer erfindungsgemäßen Solarabsorbervorrichtung, und
- Fig. 10: einen schematischen Querschnitt eines nicht erfindungsgemäßen Solarkollektors.

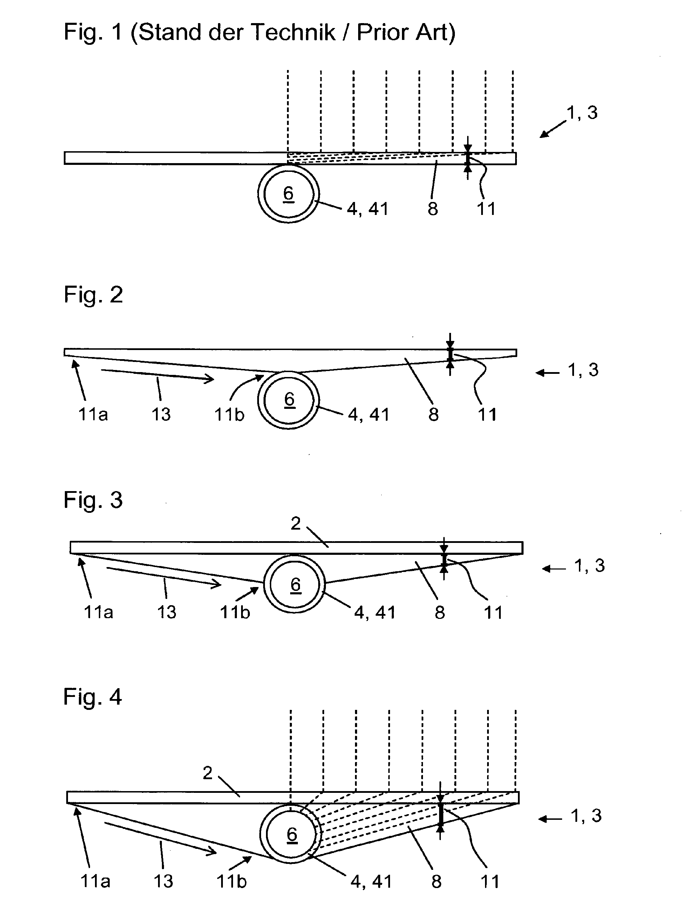

Die Fig. 1 zeigt einen schematischen Querschnitt durch eine Solarabsorbervorrichtung 3 nach dem Stand der Technik mit einem Solarabsorber 1 zum Absorbieren einer Solarstrahlung und Weiterleitung einer Wärme. Dafür weist der Solarabsorber 1 einen wärmeleitenden Grundkörper 8 der Dicke 11 und ein Solarfluid 6 führendes Rohrleitungssystem 4 mit einem Rohr 41 auf. Der Querschnitt verläuft senkrecht zur Längsachse des Rohres 41. Mit gestrichelten Linien ist eine auf den Solarabsorber 1 auftreffende Solarstrahlung sowie ein Wärmestrom innerhalb des Solarabsorbers angedeutet. Es wird deutlich, dass die Wärmestromdichte am Übergang vom Absorber 1 zum Rohr 41 und in Rohrnähe besonders hoch ist.

Die Fig. 2 zeigt einen schematischen Querschnitt einer Ausführungsform einer nicht erfindungsgemäßen Solarabsorbervorrichtung 3. Die Solarabsorbervorrichtung 3 umfasst einen Solarabsorber 1 zum Absorbieren einer Solarstrahlung und Weiterleitung einer Wärme an ein Rohrleitungssystem 4. Dabei weist der Solarabsorber 1 einen wärmeleitenden Grundkörper 8 mit einer Dicke 11 auf. Der wärmeleitende Grundkörper 8 weist Wärmeleitmittel zur gerichteten Wärmeleitung auf, um eine Anpassung einer Solarabsorbertemperatur über eine Flächenerstreckung des Grundkörpers 8 des Solarabsorbers 1 zu realisieren. Die Wärmeleitmittel sind als ein variabler Dickenverlauf 13 (gekennzeichnet durch den Pfeil bei 13) des Materials 8 mit zwei unterschiedlichen Dicken 11 a und 11 b ausgeführt. Mit Dicke 11 wird eine Dicke senkrecht gemessen zur Absorptionsfläche des Solarabsorbers 1 bezeichnet. Weiterhin ist der Dickenverlauf 13 des Solarabsorbers 1 kontinuierlich verlaufend und korrespondierend zu dem Rohrleitungssystem 4 ausgebildet.

Unterhalb des Solarabsorbers 1 ist eines der Rohre 41 des mehrere Rohre oder Rohrabschnitte umfassenden Rohrleitungssystems 4 gezeigt Das Rohrleitungssystem 4 dient zum Führen eines Solarfluids 6, welches die vom Solarabsorber 1 abgeführte Wärme der Solarstrahlung aufnimmt und abtransportiert.

Insgesamt ist eine Solarabsorbervorrichtung 3 aus einem wärmeleitenden Solarabsorbermaterial 8 und ein darunter angeordnetes Rohr 41 mit einem durchströmenden Solarfluid 6 dargestellt. Die Dicke 11 b des Grundkörpers 8 in der Mitte des Solarabsorbers 1 ist größer als die Dicke 11a am Rand des Solarabsorbers 1, wobei der Dickenverlauf 13 der Dicke 11 kontinuierlich ist. Das Maximum der Dicke 11b befindet sich unmittelbar oberhalb des Rohres 41 und berührt das Rohr 41. Der Grundkörper 8 des Solarabsorbers 1 ist aus einem einheitlichen, insbesondere homogenen, Material ausgebildet, beispielsweise aus Kupfer oder einer Kupferlegierung.

Üblicherweise ist das Rohrleitungssystem 4 in ein hier nicht gezeigtes Isoliermaterial eingebettet, um einen Wärmeverlust an die Umgebung unterhalb des Solarabsorbers 1 zu verhindern. Der Wärmetransport zwischen Grundkörper 8 und Rohr 41 ist umso ungehinderter, je größer die Kontaktfläche zwischen diesen Bauteilen ist.

Die Fig. 3 zeigt einen schematischen Querschnitt einer weiteren Ausführungsform einer nicht erfindungsgemäßen Solarabsorbervorrichtung 3. Die Solarabsorbervorrichtung 3 und das Rohrleitungssystem 4 entsprechen prinzipiell denen der Fig. 2. Die einzigen Unterschiede sind der hier anders ausgebildete Dickenverlauf 13 des Grundkörpers 8, die teilweise Einbettung des Rohres 41 in das Solarabsorbermaterial 8 und die Beschichtung 2. Da das Rohr 41 teilweise in den Solarabsorbergrundkörper 8 eingebettet ist, befindet sich die maximale Dicke 11 b am Rand des Rohres 41.

Die Wärmeableitung bei dem Ausführungsbeispiel nach Fig. 3 wird somit durch zwei Faktoren gegenüber dem Ausführungsbeispiel nach Fig. 2 begünstigt: Zum einen ist die Kontaktfläche zwischen Rohr 41 und Solarabsorber 1 größer und zum anderen ist der Dickenverlauf 13 steiler, das heißt, die maximale Dicke 11 b ist größer. Insgesamt ergibt sich daraus eine verbesserte Wärmeleitfähigkeit im Bereich des Rohres 41.

Weiterhin ist in diesem Ausführungsbeispiel eine Beschichtung 2 des Solarabsorbers 1 dargestellt. Diese Beschichtung 2 dient der Verbesserung der thermischen bzw. der Absorptions- und Emissionseigenschaften des Solarabsorbers 1. Sie ist beispielsweise aus Schwarzchrom hergestellt.

Die Fig. 4 zeigt einen schematischen Querschnitt einer weiteren Ausführungsform einer nicht erfindungsgemäßen Solarabsorbervorrichtung 3. Die Bauteile der Fig. 4 entsprechen wiederum denen der Ausführungsbeispiele der Fig. 2 und 3. Allerdings ist der hier gezeigte Dickenverlauf 13 noch steiler und das Rohr 41 ist weiter - nahezu komplett - in den Solarabsorber 1 eingebettet, sodass die Kontaktfläche zwischen Rohr 41 und Grundkörper 8 größer ist als in den beiden zuvor beschriebenen Ausführungsbeispielen. Der Wärmefluss ist somit weiter optimiert, wie am Verlauf und an der Dichte der gestrichelten Linien (auftreffende Solarstrahlung sowie Wärmestrom innerhalb des Solarabsorbers) zu erkennen ist.

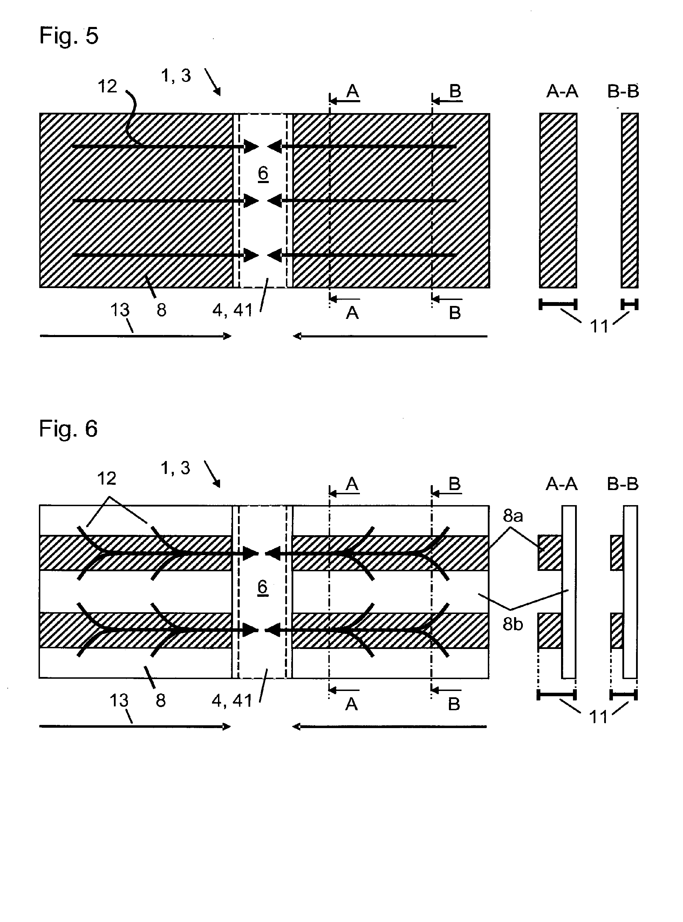

Die Fig. 5 zeigt eine schematische Ansicht von unten auf eine nicht erfindungsgemäße Solarabsorbervorrichtung 3 gemäß der Fig. 3 mit Grundkörper 8 und Rohrleitungssystem 4 (hier ohne Beschichtung 2).

In der Ansicht nach Fig. 5 verläuft der Dickenverlauf 13 des Grundkörpers 8 aus der Zeichenebene heraus und ist somit nicht zu erkennen. Die Richtung des Dickenverlaufs 13 ist durch die Pfeile angedeutet, wobei der Dickenverlauf 13 in Richtung der Pfeile bis zum Kontakt mit dem Rohr 41 zunimmt. Dieser Sachverhalt ist auch den verschiedenen Dicken 11 in den Schnittdarstellungen A-A und B-B zu entnehmen. Der Wärmefluss 12 verläuft wie der ansteigende Dickenverlauf 13 in Richtung des Rohrs 41. In den an das Rohr 41 anschließenden Bereichen des Grundkörpers 8 werden die thermischen Verluste durch eine Erhöhung der Dicke 11 des Solarabsorbers 1 ausgeglichen, sodass sich über die gesamte Fläche des Solarabsorbers 1 eine möglichst gleichmäßige Absorbertemperatur und in den verschiedenen Querschnitten (Beispiel A-A und B-B) eine möglichst einheitliche Dichte des Wärmeflusses 12 ergibt.

Die Fig. 6 zeigt eine schematische Ansicht von unten auf eine erfindungsgemäße Solarabsorbervorrichtung 3. Der Aufbau des Solarabsorbers 1 mit einem Rohr 41 des Rohrleitungssystems 4 und einem hindurchströmenden Solarfluid 6 entspricht prinzipiell der Fig. 5 bzw. 3. Jedoch wird in dem Ausführungsbeispiel nach Fig. 6 die Optimierung des Wärmeflusses 12 mit einer rippenähnlichen Ausgestaltung der Wärmeleitmittel verwirklicht. Die Wärmeleitmittel umfassen einen Grundkörper 8 mit mehreren unterschiedlich ausgebildeten Bereichen 8a und 8b. Die unterschiedlichen Bereiche 8a und 8b zeichnen sich aufgrund ihres unterschiedlichen Dickenverlaufs durch eine unterschiedliche Wärmeleitfähigkeit aus.

In dieser Ausführungsform weist der Bereich 8a durch seine in Richtung des Rohres 41 zunehmende Dicke 11 eine höhere Wärmeleitfähigkeit auf als der Bereich 8b mit seiner konstanten Dicke. Das sorgt für einen gesteigerten Wärmefluss in dem entsprechenden Bereich, während die Wärmestromdichte zumindest näherungsweise konstant ist (s. auch Fig. 4). Ein variierender Dickenverlauf 13 kann sowohl kontinuierlich als auch diskret über die verschiedenen Bereiche 8a und/oder 8b verlaufen. Die Wärmeleitmittel sind so ausgebildet, dass die integrale Wärmeleitfähigkeit trotz Konstanz der spezifischen Wärmeleitfähigkeit aufgrund der zunehmenden Dicke 11 zum Rohr hin ansteigt. Dieser geometrische Sachverhalt ist auch den verschiedenen Dicken 11 in den Schnittdarstellungen A-A und B-B zu entnehmen.

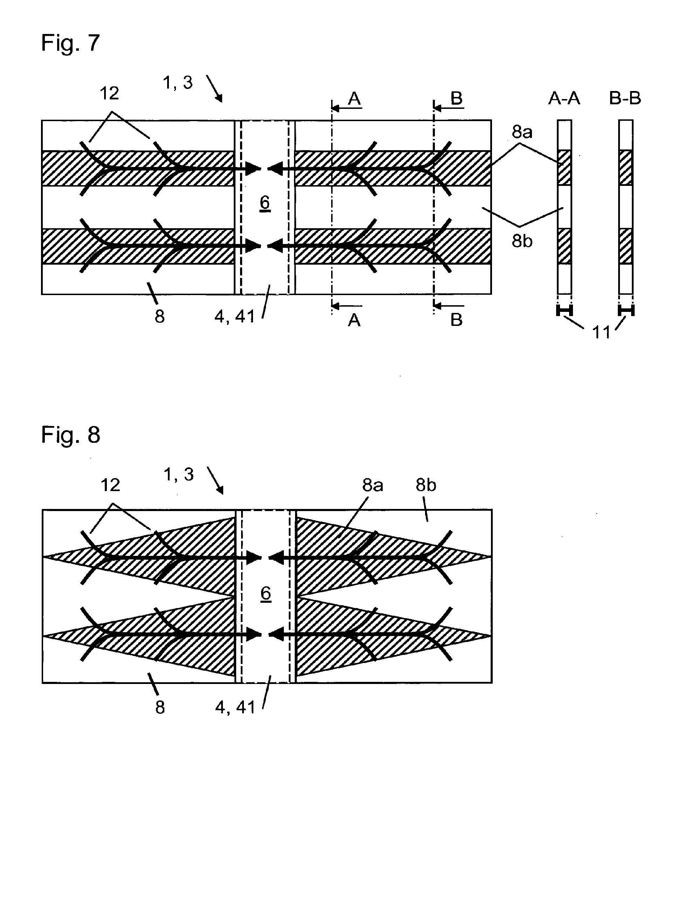

Die Fig. 7 zeigt eine schematische Ansicht von unten auf eine weitere erfindungsgemäße Solarabsorbervorrichtung 3. Der Aufbau ähnelt dem des in der Fig. 6 gezeigten Ausführungsbeispiels. Jedoch sind die streifenförmigen Bereiche 8a des Grundkörpers 8 aus einem Material mit höherer Wärmeleitfähigkeit abwechselnd mit den streifenförmigen Bereichen 8b des Grundkörpers 8 aus einem Material mit niedrigerer Wärmeleitfähigkeit bei gleicher und konstanter Dickenabmessung 11 in der selben Ebene angeordnet. Dadurch ergibt sich ein anderer Verlauf des Wärmeflusses 12 in Richtung der Rohre 41 im Vergleich zu dem der Fig. 6. Die Dichte des Wärmeflusses 12 steigt in dieser Ausführungsform zum Rohr 41 hin immer mehr an, was aber durch Einbettung des gut wärmeleitenden Materials ausgeglichen wird. Die Wärme wird somit effektiv an das Solarfluid 6 in den Rohren 41 des Rohrleitungssystems 4 weitergeleitet.

Die Fig. 8 zeigt eine schematische Ansicht von unten auf eine weitere erfindungsgemäße Solarabsorbervorrichtung 3. Der Aufbau entspricht dem des in der Fig. 7 gezeigten Ausführungsbeispiels. Jedoch sind die Bereiche 8a und 8b des Grundkörpers 8 aus Materialien mit höherer bzw. niedrigerer Wärmeleitfähigkeit abwechselnd und versetzt zueinander bei gleicher und konstanter Dickenabmessung 11 in der selben Ebene angeordnet. Die Dichte des Wärmeflusses 12 steigt auch in dieser Ausführungsform zum Rohr 41 hin immer mehr an, was aber durch Einbettung des gut wärmeleitenden Materials ausgeglichen wird. Die Wärme wird somit effektiv an das Solarfluid 6 in den Rohren 41 des Rohrleitungssystems 4 weitergeleitet.

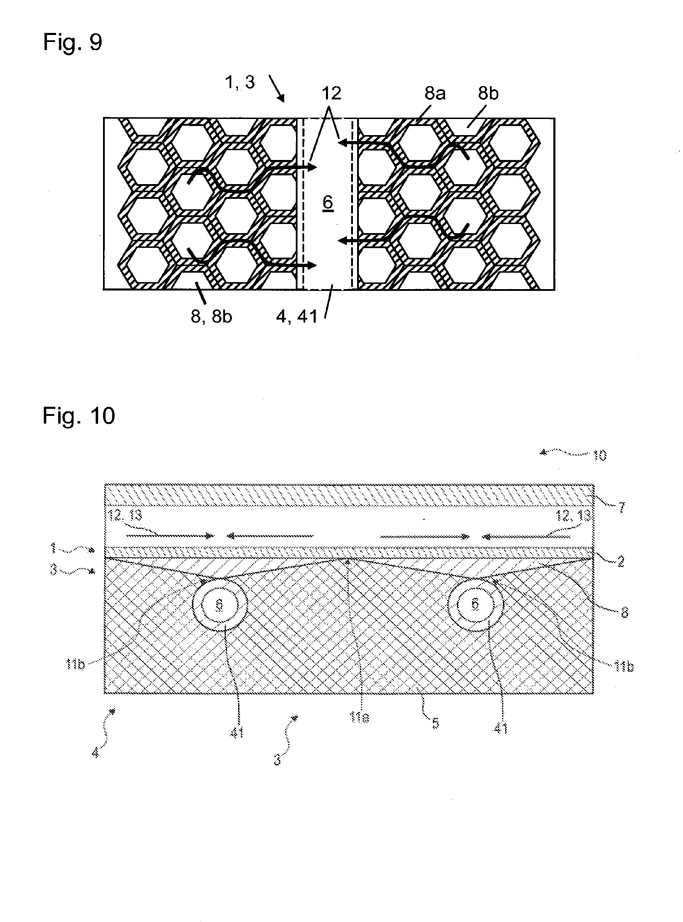

Die Figur 9 zeigt eine schematische Ansicht von unten auf eine weitere erfindungsgemäße Solarabsorbervorrichtung 3. Der prinzipielle Aufbau entspricht dem der Figuren 7 und 8 mit Bereichen 8a und 8b aus Materialien unterschiedlicher Wärmeleitfähigkeiten. Hier sind die Bereiche 8a und 8b in Form eines Netzes ausgebildet, wobei der Bereich 8a von durchgehenden, zusammenhängenden Netzstegen (schraffiert) und der Bereich 8b von Zwischenflächen (weiß) gebildet ist, die ihrerseits von den Netzstegen umschlossen sind. Die auf den Netzstegen 8a auftreffende Solarstrahlung wird absorbiert, der sich ergebende Wärmestrom 12 fließt über die Netzstege 8a in das Rohrleitungssystem 4. Der Wärmestrom 12, der sich aus der auf den Zwischenflächen 8b auftreffenden Solarstrahlung ergibt, fließt zunächst in die umgebenden Netzstege und von dort ebenfalls in das Rohrleitungssystem 4.

Die Bereiche 8a (schraffiert) der Solarabsorber nach den Figuren 6, 7, 8 und 9 wirken wie Kühlabschnitte zwischen den Bereichen 8b und leiten die Wärme, die die Solarstrahlung erzeugt, bevorzugt weiter an das Rohrleitungssystem. Dabei wirken sie gegenüber den Bereichen 8b wie Wärmesenken, während sie gegenüber dem Rohrleitungssystem 4 als Wärmequelle funktionieren.

Die Fig. 10 zeigt einen schematischen Querschnitt eines nicht erfindungsgemäßen Solarkollektors 10. Der Solarkollektor 10 umfasst eine erfindungsgemäße Solarabsorbervorrichtung 3 zum Umwandeln von Strahlungsenergie in Wärmeenergie, ein hier nicht gezeigtes Gehäuse, eine Glasabdeckung 7, eine Wärmedämmung 5 und diverse nicht gezeigte Anschlüsse an eine Solaraufbereitungsanlage, beispielsweise auf einem Gebäude. Der Grundkörper 8 des Solarabsorbers 1 ist mit Wärmeleitmitteln ausgeführt. Die Wärmeleitmittel umfassen einen variierenden Dickenverlauf 13 des Grundkörpers 8.

Weiterhin ist der Dickenverlauf 13 an die Geometrie des Rohrleitungssystems 4 angepasst, sodass die Bereiche mit stärkerer Dicke 11 b oberhalb der Rohre 41 des Rohrleitungssystems 4 zum Abtransport der umgewandelten Wärmeenergie angeordnet sind. Der Aufbau der Solarabsorbervorrichtung 3 entspricht prinzipiell dem Aufbau der Solarabsorbervorrichtung 3 der Fig. 2. Die Rohre 41 sind in eine Wärmedämmung 5 eingebettet, um Wärmeverluste einzudämmen. Die Wärmedämmung 5 ist beispielsweise als Isoliermaterial aus einem Kunststoff oder Bauschaum ausgeführt. Zum Schutz des Solarkollektors 10 vor Umwelteinflüssen wie Regen oder Staub dient eine Glasabdeckung 7, beispielsweise in Form einer Glasplatte.

## Patentansprüche

1. Solarabsorber (1), insbesondere ein Solarabsorber für eine Solarabsorbervorrichtung und/oder einen Solarkollektor, zum Absorbieren einer Solarstrahlung und Weiterleitung einer Wärme an ein Rohrleitungssystem (4), wobei der Solarabsorber (1) einen wärmeleitenden Grundkörper (8) aufweist,
**dadurch gekennzeichnet, dass** der wärmeleitende Grundkörper Wärmeleitmittel mit mindestens zwei hinsichtlich des Materials unterschiedlich ausgebildeten Bereichen (8a, 8b) zur Ausbildung lokaler Bereiche mit verbessertem Wärmefluss umfasst, um eine Anpassung einer Solarabsorbertemperatur über die Flächenerstreckung des Grundkörpers (8) des Solarabsorbers (1) zu realisieren und eine Wärmeleitfähigkeit des Solarabsorbers an eine Wärmeenergieflussverteilung anzupassen.

2. Solarabsorber nach Anspruch 1,
**dadurch gekennzeichnet, dass** die Bereiche (8a, 8b) in Form abwechselnd nebeneinander liegender Streifen ausgebildet sind,

3. Solarabsorber nach Anspruch 1,
**dadurch gekennzeichnet, dass** die Bereiche (8a, 8b) in Form abwechselnd nebeneinander liegender Dreiecke ausgebildet sind.

4. Solarabsorber nach Anspruch 1,
**dadurch gekennzeichnet, dass** die Bereiche (8a, 8b) in Form eines Netzes ausgebildet sind, wobei ein Bereich (8a) von durchgehenden, zusammenhängenden Netzstegen und ein anderer Bereich (8b) von von den Netzstegen umschlossenen Zwischenflächen gebildet ist.

5. Solarabsorber nach einem der vorhergehenden Ansprüche,
**dadurch gekennzeichnet, dass** das Rohrleitungssystem (4) in den wärmeleitenden Grundkörper (8) integriert ausgebildet ist.

6. Solarabsorber (1) nach einem der vorhergehenden Ansprüche,
**dadurch gekennzeichnet, dass** der Grundkörper (8) mittels Walzen hergestellt ist.

7. Solarabsorber (1) nach einem der vorhergehenden Ansprüche,
**dadurch gekennzeichnet, dass** eine auf dem Solarabsorber (1) ausgebildete Beschichtung (2) zur Verbesserung der Absorptionseigenschaften des Solarabsorbers (1) vorgesehen ist.

8. Solarabsorber (1) nach einem der vorhergehenden Ansprüche,
**dadurch gekennzeichnet, dass** der wärmeleitenden Grundkörper (8) eine Dicke (11) aufweist, wobei die Wärmeleitmittel einen variablem Dickenverlauf zur gerichteten Wärmeleitung aufweisen, um eine Anpassung einer Solarabsorbertemperatur über die Flächenerstreckung des Grundkörpers (8) des Solarabsorbers (1) zu realisieren.

9. Solarabsorber (1) nach Anspruch 8,
**dadurch gekennzeichnet, dass** die Wärmeleitmittel einen variablen Dickenverlauf (13) des Grundkörpers (8) mit mindestens zwei unterschiedlichen Dicken (11a, 11b) umfassen.

10. Solarabsorber (1) nach Anspruch 8 oder 9,
**dadurch gekennzeichnet, dass** der Dickenverlauf (13) kontinuierlich verlaufend ausgebildet ist.

11. Solarabsorber (1) nach Anspruch 8 oder 9,
**dadurch gekennzeichnet, dass** der Dickenverlauf (13) diskret verlaufend ausgebildet ist.

12. Solarabsorber (1) nach einem der Ansprüche 9 bis 11
**dadurch gekennzeichnet, dass** der wärmeleitende Grundkörper Wärmeleitmittel mit mindestens zwei hinsichtlich des Dickenverlaufs unterschiedlich ausgebildeten Bereichen umfasst.

13. Solarabsorbervorrichtung (3), umfassend mindestens einen Solarabsorber (1) zum Absorbieren einer Solarstrahlung, und mindestens ein von einem Solarfluid (6) durchströmbares Rohrleitungssystem (4), welches in wärmeleitender Wirkverbindung mit dem mindestens einen Solarabsorber (1) steht,
**dadurch gekennzeichnet, dass** der Solarabsorber (1) nach einem der vorherigen Ansprüche 1 bis 12 ausgebildet ist.

14. Solarabsorbervorrichtung (3) nach Anspruch 13,
**dadurch gekennzeichnet, dass** die Wärmeleitmittel des Solarabsorbers (1) korrespondierend zu dem Rohrleitungssystem (4) ausgebildet sind, sodass eine einheitliche volumetrische Wärmeflussdichte (12) von dem Solarabsorber(1) zu dem durch das Rohrleitungssystem (4) strömenden Solarfluid (6) realisiert ist.

15. Solarkollektor (10), umfassend mindestens eine Solarabsorbervorrichtung zum Umwandeln von Strahlungsenergie in Wärmeenergie,
**dadurch gekennzeichnet, dass** die Solarabsorbervorrichtung (3) nach einem der vorherigen Ansprüche 13 oder 14 ausgebildet ist.

## Claims

1. Solar absorber (1), in particular a solar absorber for a solar absorber device and/or a solar collector, for absorbing solar radiation and propagating heat to a pipeline system (4), wherein the solar absorber (1) has a heat-conducting basic body (8), **characterized in that** the heat-conducting basic body comprises heat-conducting means with at least two regions (8a, 8b), which are designed differently in terms of the material, for forming local regions with improved heat flow in order to achieve matching of a solar absorber temperature over the surface extent of the basic body (8) of the solar absorber (1) and to match a thermal conductivity of the solar absorber to a heat energy flow distribution.

2. Solar absorber according to Claim 1, **characterized in that** the regions (8a, 8b) are designed in the form of strips which are situated alternately next to one another.

3. Solar absorber according to Claim 1, **characterized in that** the regions (8a, 8b) are designed in the form of triangles situated alternately next to one another.

4. Solar absorber according to Claim 1, **characterized in that** the regions (8a, 8b) are designed in the form of a grid, wherein one region (8a) is formed by continuous, contiguous grid webs and another region (8b) is formed by intermediate surfaces enclosed by the grid webs.

5. Solar absorber according to one of the preceding claims, **characterized in that** the pipeline system (4) is designed to be integrated into the heat-conducting basic body (8).

6. Solar absorber (1) according to one of the preceding claims, **characterized in that** the basic body (8) is produced by means of rolls.

7. Solar absorber (1) according to one of the preceding claims, **characterized in that** a coating (2) formed on the solar absorber (1) is provided to improve the absorption properties of the solar absorber (1).

8. Solar absorber (1) according to one of the preceding claims, **characterized in that** the heat-conducting basic body (8) has a thickness (11), wherein the heat-conducting means have a variable thickness profile for directional heat conduction in order to achieve matching of a solar absorber temperature over the surface extent of the basic body (8) of the solar absorber (1).

9. Solar absorber (1) according to Claim 8, **characterized in that** the heat-conducting means comprise a variable thickness profile (13) of the basic body (8) with at least two different thicknesses (11a, 11b).

10. Solar absorber (1) according to Claim 8 or 9, **characterized in that** the thickness profile (13) is designed to extend continuously.

11. Solar absorber (1) according to Claim 8 or 9, **characterized in that** the thickness profile (13) is designed to extend discretely.

12. Solar absorber (1) according to one of Claims 9 to 11, **characterized in that** the heat-conducting basic body comprises heat-conducting means with at least two regions which are designed differently in terms of the thickness profile.

13. Solar absorber device (3), comprising at least one solar absorber (1) for absorbing solar radiation, and at least one pipeline system (4) through which a solar fluid (6) can flow and which is in heat-conducting operative connection with the at least one solar absorber (1), **characterized in that** the solar absorber (1) is designed according to one of the preceding Claims 1 to 12.

14. Solar absorber device (3) according to Claim 13, **characterized in that** the heat-conducting means of the solar absorber (1) are designed to correspond to the pipeline system (4), with the result that a uniform volumetric heat flow density (12) from the solar absorber (1) to the solar fluid (6) flowing through the pipeline system (4) is achieved.

15. Solar collector (10), comprising at least one solar absorber device for converting radiant energy into heat energy, **characterized in that** the solar absorber device (3) is designed according to one of the preceding Claims 13 and 14.

## Revendications

1. Absorbeur solaire (1), en particulier absorbeur solaire pour un dispositif absorbeur solaire et/ou un collecteur solaire, pour l'absorption d'un rayonnement solaire et la retransmission d'une chaleur à un système de canalisations (4), dans lequel l'absorbeur solaire (1) présente un corps de base conducteur de la chaleur (8), **caractérisé en ce que** le corps de base conducteur de la chaleur comprend des moyens de conduction de la chaleur avec au moins deux zones constituées différemment au niveau du matériau (8a, 8b) pour la formation de zones locales avec un flux de chaleur amélioré, afin de réaliser une adaptation d'une température de l'absorbeur solaire sur l'étendue superficielle du corps de base (8) de l'absorbeur solaire (1) et d'adapter une conductibilité thermique de l'absorbeur solaire à une répartition du flux d'énergie thermique.

2. Absorbeur solaire selon la revendication 1, **caractérisé en ce que** les zones (8a, 8b) sont configurées en forme de bandes juxtaposées en alternance.

3. Absorbeur solaire selon la revendication 1, **caractérisé en ce que** les zones (8a, 8b) sont configurées en forme de triangles juxtaposés en alternance.

4. Absorbeur solaire selon la revendication 1, **caractérisé en ce que** les zones (8a, 8b) sont configurées en forme de réseau, dans lequel une zone (8a) est formée par des branches de réseau continues sans interruption et une autre zone (8b) est formée par des surfaces intermédiaires entourées par les branches de réseau.

5. Absorbeur solaire selon l'une quelconque des revendications précédentes, **caractérisé en ce que** le système de canalisations (4) est réalisé sous forme intégrée dans le corps de base conducteur de la chaleur (8).

6. Absorbeur solaire (1) selon l'une quelconque des revendications précédentes, **caractérisé en ce que** le corps de base (8) est fabriqué au moyen de rouleaux.

7. Absorbeur solaire (1) selon l'une quelconque des revendications précédentes, **caractérisé en ce qu'**il est prévu un revêtement (2) formé sur l'absorbeur solaire (1) pour l'amélioration des propriétés d'absorption de l'absorbeur solaire (1).

8. Absorbeur solaire (1) selon l'une quelconque des revendications précédentes, **caractérisé en ce que** le corps de base conducteur de la chaleur (8) présente une épaisseur (11), dans lequel les moyens de conduction de la chaleur présentent un profil d'épaisseur variable pour la conduction dirigée de la chaleur, afin de réaliser une adaptation d'une température d'absorbeur solaire sur l'étendue superficielle du corps de base (8) de l'absorbeur solaire (1).

9. Absorbeur solaire (1) selon la revendication 8, **caractérisé en ce que** les moyens de conduction de la chaleur comprennent un profil d'épaisseur variable (13) du corps de base (8) avec au moins deux épaisseurs différentes (11a, 11b).

10. Absorbeur solaire (1) selon la revendication 8 ou 9, **caractérisé en ce que** le profil d'épaisseur (13) est réalisé avec un tracé continu.

11. Absorbeur solaire (1) selon la revendication 8 ou 9, **caractérisé en ce que** le profil d'épaisseur (13) est réalisé avec un tracé discret.

12. Absorbeur solaire (1) selon l'une quelconque des revendications 9 à 11, **caractérisé en ce que** le corps de base conducteur de la chaleur comprend des moyens de conduction de la chaleur avec au moins deux zones configurées différemment au niveau du profil d'épaisseur.

13. Dispositif absorbeur solaire (3), comprenant au moins un absorbeur solaire (1) pour absorber un rayonnement solaire, et au moins un système de canalisations (4) pouvant être parcouru par un fluide solaire (6), qui est en liaison active de conduction de chaleur avec ledit au moins un absorbeur solaire (1), **caractérisé en ce que** l'absorbeur solaire (1) est configuré selon l'une quelconque des revendications précédentes 1 à 12.

14. Dispositif absorbeur solaire (3) selon la revendication 13, **caractérisé en ce que** les moyens de conduction de la chaleur de l'absorbeur solaire (1) sont configurés de façon correspondante au système de canalisations (4), de façon à réaliser une densité de flux thermique volumétrique unique (12) de l'absorbeur solaire (1) au fluide solaire (6) circulant dans le système de canalisations (4).

15. Collecteur solaire (10), comprenant au moins un dispositif absorbeur solaire pour la conversion d'énergie du rayonnement en énergie thermique, **caractérisé en ce que** le dispositif absorbeur solaire (3) est configuré selon l'une des revendications précédentes 13 ou 14.
